# EUROPEAN PATENT APPLICATION

(11) **EP 4 765 367 A1**
(43) Date of publication of application: **24.06.2026**
(21) Application number: 24889027.9
(22) Date of filing: 30.10.2024
(51) Int. Cl.: H01M 50/124, H01M 50/119, H01M 50/121, H01M 50/133, H01M 50/105, H01M 50/126, H01M 50/129

(54) **POUCH FILM LAMINATE, POUCH-TYPE BATTERY CASE, AND POUCH-TYPE SECONDARY BATTERY**

(30) Priority: 08.11.2023 KR 20230154026; 21.05.2024 KR 20240065939; 28.06.2024 KR 20240085794
(71) Applicant: LG Energy Solution, Ltd., Seoul 07335 (KR)
(72) Inventor: SONG, Dae Woong, Daejeon 34122 (KR); HWANG, Soo Ji, Daejeon 34122 (KR); LEE, Wan Soo, Daejeon 34122 (KR); SHIN, Ji Hyun, Daejeon 34122 (KR); KIM, Gi Woung, Daejeon 34122 (KR)
(74) Representative: Plasseraud IP
(86) International application number: PCT/KR2024/016817
(87) International publication number: WO 2025/100839

(57) **Abstract**

The present invention relates to a pouch film laminate including a base layer, a gas barrier layer, and a sealant layer, which are sequentially laminated, wherein the sealant layer contains a slip agent of 5 mg/m² to 25 mg/m², present on a surface thereof, the sealant layer has a surface roughness Ra of 0.1 µm to 0.5 µm, and the amount of the slip agent is determined by cutting the pouch film laminate to 100 mm in an MD direction x 100 mm in a TD direction, dropping 5 ml of chloroform on the surface of the sealant layer of the pouch film laminate, and allowing the resulting product to stand for 1 minute to prepare a slip agent extraction solution, and then measuring an amount of the slip agent contained in the slip agent extraction solution using gas chromatography.

## Description

### TECHNICAL FIELD

### Cross-reference to Related Applications

This application claims the benefit of Korean Patent Application Nos. 10-2023-0154026 filed on November 8, 2023, 10-2024-0065939 filed on May 21, 2024, and 10-2024-0085794 filed on June 28, 2024 in the Korean Intellectual Property Office, the disclosure of which is incorporated herein in its entirety by reference.

### Technical Field

The present invention relates to a pouch film laminate, a pouch type battery case, and a pouch type secondary battery.

### BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices.

The secondary batteries are generally manufactured in a way that an electrode active material slurry is applied onto a positive electrode current collector and a negative electrode current collector to prepare a positive electrode and a negative electrode, and the positive electrode and the negative electrode are stacked on both sides of a separator to form an electrode assembly having a predetermined shape, and then the electrode assembly is accommodated in a battery case, an electrolyte is injected, and the battery case is sealed.

Secondary batteries are classified into pouch type secondary batteries and can type secondary batteries according to a material of a case accommodating an electrode assembly. The pouch type secondary batteries accommodate the electrode assembly in a pouch formed of flexible polymer materials. Then, the can type secondary batteries accommodate the electrode assembly in a case formed of materials such as metal or plastic.

The pouch type battery case is manufactured by performing press processing on a ductile pouch film laminate to form a cup portion. Thereafter, once the cup portion is formed, the electrode assembly is accommodated in a receiving space of the cup portion and a sealing portion is sealed to manufacture a secondary battery.

Among these press processes, drawing is performed by inserting a pouch film into a press machine and applying pressure to the pouch film laminate with a punch to stretch the pouch film laminate. The pouch film laminate is generally formed of a plurality of layers in which a polymer film such as polyethylene terephthalate is laminated on one side of a metal gas barrier layer made, and a sealant layer is laminated on the other side.

Meanwhile, the recent growing demand for high-capacity batteries such as electric vehicle batteries and ESS batteries has driven an increasing need for battery cases capable of accommodating more electrode assemblies. Accordingly, efforts are underway to increase the depth of a molded cup portion of a pouch type battery case or to adopt a two-cup molding process where both upper and lower cases are molded with cup portions to increase the volume of the cup portions.

In typical manufacturing of pouch film laminates, a slip agent was included in a sealant layer of an innermost layer of a pouch film, or a slip agent was applied onto a surface of a sealant layer to prevent adhesion between pouch films and facilitate post-processing. However, an excessive amount of a slip agent present on the surface of the sealant layer causes excessive contamination of the mold for cup portion molding, leading to degradation in processability or frictional force, which results in wrinkles in the pouch film laminate during cup portion molding. In addition, a small amount of a slip agent present on the surface of the sealant layer causes degradation in moldability during cup portion molding.

In this case, for enhanced moldability and processability, it is necessary to control the amount of a slip agent present on the surface of the sealant layer, but also the characteristics of the surface of the sealant layer, considering its interaction with a molding mold in close contact therewith.

Accordingly, there is a need for the development of a pouch film laminate designed to prevent mold contamination for enhanced processability, and avoid moldability degradation caused during cup portion molding.

### DISCLOSURE OF THE INVENTION

### TECHNICAL PROBLEM

The present invention is designed to overcome the limitations described above, and thus an aspect of the present invention provides a pouch film laminate configured to control an amount of a slip agent present on a surface of a sealant layer measured by a specific measuring method within a certain range while also regulating a surface roughness of the sealant layer within a certain range, thereby exhibiting improved processability and reduced wrinkles and moldability degradation induced during cup molding, a pouch type battery case, and a pouch type secondary battery.

The objective of the present invention is not limited to the aforesaid, but other objectives not described herein will be clearly understood by those skilled in the art from descriptions below.

### TECHNICAL SOLUTION

[1] According to an aspect of the present invention, provided is a pouch film laminate including a base layer, a gas barrier layer, and a sealant layer, which are sequentially laminated, wherein the sealant layer contains a slip agent of 5 mg/m² to 25 mg/m², present on a surface thereof, the sealant layer has a surface roughness Ra of 0.1 µm to 0.5 µm, and an amount of the slip agent is determined by cutting the pouch film laminate to 100 mm in an MD direction x 100 mm in a TD direction, dropping 5 ml of chloroform on the surface of the sealant layer of the pouch film laminate, and allowing the resulting product to stand for 1 minute to prepare a slip agent extraction solution, and then measuring an amount of the slip agent contained in the slip agent extraction solution using gas chromatography.
[2] The present invention provides the pouch film laminate according to [1] above, wherein the sealant layer may contain a slip agent of 5 mg/m² to 15 mg/m², present on a surface thereof.
[3] The present invention provides the pouch film laminate according to [1] or [2] above, wherein the sealant layer may have a surface roughness Ra of 0.1 µm to 0.3 µm.
[4] The present invention provides the pouch film laminate according to any one of [1] to [3] above, wherein the slip agent may include at least one selected from fatty acid amide-based compounds.
[5] The present invention provides the pouch film laminate according to any one of [1] to [4] above, wherein the base layer may have a thickness of 5 µm to 70 µm.
[6] The present invention provides the pouch film laminate according to any one of [1] to [5] above, wherein the gas barrier layer may include at least one metal selected from the group consisting of aluminum (Al), copper (Cu), stainless steel (SUS), nickel (Ni), titanium (Ti), and INVAR.
[7] The present invention provides the pouch film laminate according to any one of [1] to [6] above, wherein the gas barrier layer may have a thickness of 20 µm to 100 µm.
[8] The present invention provides the pouch film laminate according to any one of [1] to [7] above, wherein the sealant layer may include at least one selected from polypropylene (PP), acid modified polypropylene (PPa), and casted polypropylene (CPP).
[9] The present invention provides the pouch film laminate according to any one of [1] to [8] above, wherein the sealant layer may have a thickness of 30 µm to 130 µm.
[10] The present invention provides the pouch film laminate according to any one of [1] to [9] above, wherein the pouch film laminate may have a thickness of 120 µm to 300 µm.
[11] According to another aspect of the present invention, provided is a pouch type battery case manufactured by drawing the pouch film laminates according to at least one of [1] to [10] above.
[12] The present invention provides the pouch type battery case according to [11] above, wherein the pouch type battery case may include a cup portion, and the cup portion may include a plurality of punch edges rounded with a radius of curvature of 1 mm or less.
[13] The present invention provides the pouch type battery case according to [11] or [12] above, wherein the pouch type battery case may include a cup portion, and the cup portion may include a plurality of die edges rounded with a radius of curvature of 1.5 mm or less.
[14] The present invention provides the pouch type battery case according to any one of [11] to [13] above, wherein the pouch type battery case may include a cup portion, and the cup portion may include a plurality of thickness edges rounded with a radius of curvature of 0.5 mm to 5 mm.
[15] According to another aspect of the present invention, provided is a pouch type secondary battery including the pouch type battery case according to at least one of [11] to [14] above.

### ADVANTAGEOUS EFFECTS

A pouch film laminate according to the present invention controls an amount of a slip agent present on a surface of a sealant layer within a certain range and also regulates a surface roughness of the sealant layer within a certain range, thereby exhibiting improved processability by reducing contamination of a mold caused by a large area of a sealant layer surface and an excessive amount of the slip agent present on the surface of the sealant layer, and exhibiting enhanced moldability thereof by preventing wrinkles occurring during cup molding. In addition, the pouch film laminate prevents degradation in moldability caused by an insufficient amount of a slip agent present on the surface of the sealant layer and a high surface roughness of the sealant layer.

### BRIEF DESCRIPTION OF THE DRAWINGS

The following drawings attached herein illustrate preferred examples of the present invention by example, and serve to enable technical concepts of the present invention to be further understood together with detailed description of the invention given below, and therefore the present invention should not be interpreted only with matters in such drawings. Meanwhile, the shape, size, scale, or proportion of elements in the drawings stated in the specification may be exaggerated for clarity.
FIG. 1 is a cross-sectional view of a pouch film laminate according to an embodiment of the present invention;
FIG. 2 is an exploded view of a secondary battery according to an embodiment of the present invention;
FIG. 3 is a cross-sectional view of a pouch type battery case for describing the radius of curvature of a die edge and a punch edge formed in a cup portion of the pouch type battery case according to an embodiment of the present invention;
FIG. 4 is a view showing a portion of a pouch type battery case for describing punch corners formed in a cup portion of a pouch type battery case, and length and thickness edges of each of the punch corners according to an embodiment of the present invention; and

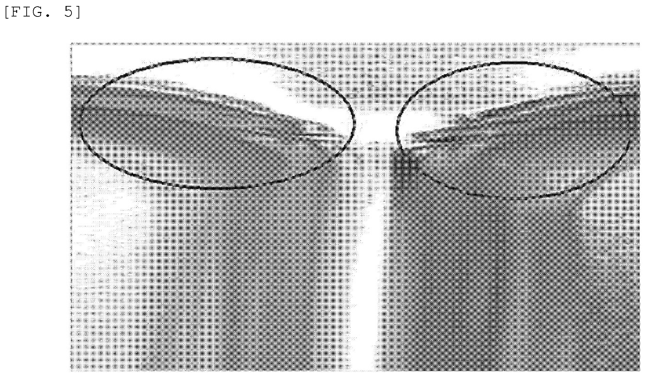

FIG. 5 is a view showing the occurrence of wrinkles at a maximum molding depth when molding a cup portion in a pouch film laminate manufactured according to Comparative Example 2.

### MODE FOR CARRYING OUT THE INVENTION

Hereinafter, the present invention will be described in detail.

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Herein, an MD direction (Machine Direction) indicates a length direction of a pouch film laminate, and a TD direction (Transverse Direction) indicates a width direction of a pouch film laminate.

Herein, a surface roughness Ra was measured using an optical measuring device (NV-2700, Optical Profiler of Nano System), and the lens used was Lens i20X, F.O.V 1.0X (F.O.V ~ 316 µm x 237 µm), and the measurement was performed using WSI envelope mode. Specifically, the scan range was ±10 µm vertically, and the surface roughness was measured at 7 points within each 2D topographic image (316 µm x 237 µm) taken at arbitrary points on the sample, and then, after excluding maximum and minimum values, the average and standard deviation were calculated for the remaining 5 points.

Herein, the term, average particle size (D50) may be defined as a particle size at a cumulative volume of 50% in a particle size distribution curve of particles. The average particle size (D50), for example, may be measured by using a laser diffraction method. The laser diffraction method generally allows the measurement of a particle size ranging from a submicron level to a few mm and may produce highly repeatable and high-resolution results.

The present inventors have repeatedly developed a pouch film laminate that prevents degradation in processability caused by frequent mold cleaning, suppresses wrinkles that occur during molding of a cup portion of a pouch film laminate, and increases a maximum molding depth of the cup portion, and consequently, have found that a pouch film laminate exhibiting excellent processability and moldability is achievable when an amount of a slip agent present on a surface of a sealant layer measured by a specific measuring method is controlled to a certain range while also a surface roughness of the sealant layer is regulated to a certain range, thereby completing the invention.

### Pouch film laminate

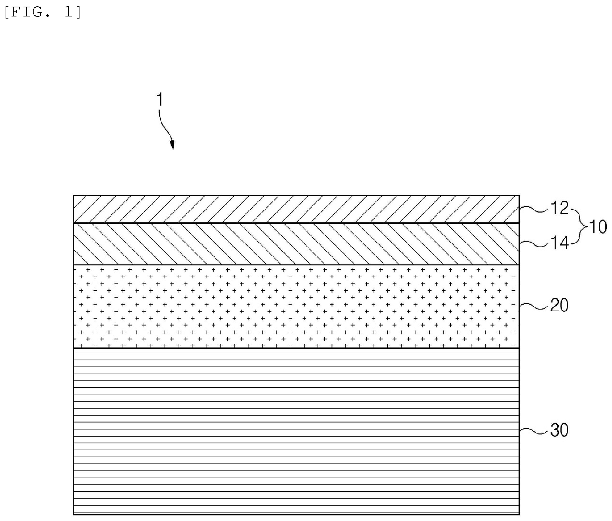

FIG. 1 shows an embodiment of a pouch film laminate according to the present invention. Hereinafter, the pouch film laminate according to the present invention will be described with reference to FIG. 1.

Referring to FIG. 1, a pouch film laminate 1 according to the present invention includes a base layer 10, a gas barrier layer 20, and a sealant layer 30, which are sequentially laminated. The sealant layer contains a slip agent of 5 mg/m² to 25 mg/m², present on a surface thereof, the sealant layer has a surface roughness Ra of 0.1 µm to 0.5 µm, and the amount of the slip agent is determined by cutting the pouch film laminate to 100 mm in an MD direction x 100 mm in a TD direction, dropping 5 ml of chloroform on the surface of the sealant layer of the pouch film laminate, and allowing the resulting product to stand for 1 minute to prepare a slip agent extraction solution, and then measuring an amount of the slip agent contained in the slip agent extraction solution using gas chromatography.

In typical manufacturing of pouch film laminates, to prevent adhesion between pouch films and facilitate post-processing, a slip agent was included in a sealant layer of an innermost layer of a pouch film, or a slip agent was applied onto a surface of a sealant layer, and thus the slip agent remained on the surface of the sealant layer. However, when the amount of slip agent on the surface of the sealant layer is excessive, a mold is quickly contaminated by the slip agent, requiring frequent cleaning of the mold, which reduces processability, and wrinkles are formed even at low molding cycles due to excessively low friction. In addition, when the slip agent is absent from or present in minimal quantities on the surface of the sealant layer to prevent the issues of processability and wrinkles, adhesion between pouch film laminates is induced, which reduces the processability, or the friction goes too high during the molding of the cup portion in the laminated pouch film, which causing a reduction in the maximum molding depth.

Therefore, to improve the processability and moldability, the amount of slip agent present on the surface of the sealant layer needs to be controlled. In addition, since the amount of slip agent present on the surface of the sealant layer may vary depending on the measurement method, it is intended to measure an amount of slip agent leading to excellent processability and moldability, using a specific measurement method.

In this case, to achieve better processability and moldability, both controlling the amount of the slip agent present on the surface of the sealant layer as described above and regulating the surface roughness Ra of the sealant layer within an appropriate range by considering the contact between the surface of the sealant layer and the mold are needed.

Specifically, even when the amount of the slip agent present on the surface of the sealant layer is within a specific range, in a case where the surface roughness of the sealant layer is excessively low, the contact between the mold and the slip agent present on the surface of the sealant layer is excessive due to the excessively large sealant layer surface area. That is, the contamination of the slip agent in the mold increases, and consequently, wrinkles are formed during the molding of the cup portion of the pouch film laminate, which causes degradation in processability.

In contrast, even when the amount of the slip agent present on the surface of the sealant layer is within a specific range, in a case where the surface roughness of the sealant layer is excessively high, wrinkles are formed during the molding of the cup portion of the pouch film laminate due to insufficient frictional force, even under the condition of no contamination of the slip agent in the mold. In such cases, frequent contact between an electrode assembly included in the cup portion and an area of wrinkles with low durability in the cup portion induces breakage of the electrode assembly or the cup portion, resulting in degraded battery properties.

Thus, an aspect of the present invention provides an excellent pouch film laminate providing a superior maximum molding depth and no wrinkles while controlling the amount of the slip agent present on the surface of the sealant layer measured by a specific method and regulating the surface roughness of the sealant layer and thus reducing contamination of a mold to achieve excellent processability.

The sealant layer contains a slip agent of 5 mg/m² to 25 mg/m², present on a surface thereof. Preferably, the sealant layer may contain a slip agent of 5.5 mg/m² or greater, 6 mg/m² or greater, 6.5 mg/m² or greater, 7.0 mg/m²or greater, 7.5 mg/m² or greater, or 8.0 mg/m² or greater, 25 mg/m² or less, 24 mg/m² or less, 22 mg/m² or less, 20 mg/m² or less, 18 mg/m² or less, 16 mg/m² or less, or 15 mg/m² or less, present on a surface thereof. More preferably, the sealant layer may contain a slip agent of 5 mg/m² to 15 mg/m², present on a surface thereof, When the amount of the slip agent present on the surface of the sealant layer is less than 5 mg/m², the frictional force is excessive, causing blocking during the manufacture of the pouch film laminate, which reduces the processability and the maximum molding depth during the molding of the cup portion of the pouch film laminate. In addition, when the amount of the slip agent present on the surface of the sealant layer is greater than 25 mg/m², the excessive amount of the slip agent present on the surface of the sealant layer shortens the cleaning cycle of a mold, resulting in reduced processability, and the mold slips due to the low frictional force, causing the non-uniform stretching of the pouch film laminate, thereby inducing wrinkles during the molding of the cup portion of the pouch film laminate. When wrinkles are formed, the electrode assembly is not tightly accommodated inside the cup portion of the pouch film laminate, causing a decrease in energy density. In this case, when the electrode assembly is forcibly accommodated, the electrode assembly breaks, causing a short circuit. Therefore, when the above range is satisfied, excellent processability and moldability may be achieved.

In addition, while satisfying the range of the amount of slip agent present on the surface of the sealant layer 30 described above, the sealant layer 30 has a surface roughness Ra of 0.1 µm to 0.5 µm. Preferably, the sealant layer may have a surface roughness Ra of 0.11 µm or greater, 0.12 µm or greater, or 0.13 µm or greater, and may have a surface roughness Ra of 0.45 µm or less, 0.40 µm or less, 0.35 µm or less, or 0.30 µm or less, and more preferably, the sealant layer may have a surface roughness Ra of 0.1 µm to 0.3 µm. When the sealant layer has a surface roughness Ra of less than 0.1 µm while satisfying the above-described range of the amount of the slip agent present on the surface of the sealant layer 30, a surface area of the sealant layer is large, and thus excessive contamination of the slip agent in the mold is caused, thereby reducing the processability and inducing wrinkles during the molding of the cup portion of the pouch film laminate. In addition, when the sealant layer has a surface roughness Ra of greater than 0.5 µm while satisfying the above-described range of the amount of the slip agent present on the surface of the sealant layer 30, insufficient frictional force causes the formation of wrinkles and reduced moldability even with no contamination of the slip agent in the mold. That is, when both the above-described range of the amount of the slip agent present on the surface of the sealant layer and the above-described surface roughness of the sealant layer are satisfied, superior processability may be achieved by reducing contamination of the slip agent in the mold, and excellent moldability may be achieved by having a deep maximum molding depth and no wrinkles during the molding of the cup portion of the pouch film laminate.

The surface roughness of the sealant layer may be controlled in various ways, but preferably, may be controlled by applying particles satisfying a specific average particle size (D50) range to the surface of the sealant layer, or by regulating a surface roughness of a nip roll used in a roll-to-roll process, and more preferably, may be controlled by applying polyethylene (PE) particles or silicon (Si) particles satisfying a specific average particle size (D50) range to the surface of the sealant layer, or by regulating a surface roughness of a nip roll used in a roll-to-roll process, and even more preferably, may be controlled by regulating a surface roughness of a nip roll used in a roll-to-roll process. When the above conditions are satisfied, it is desirable in that the surface roughness Ra of the sealant layer may be uniformly formed while excellent processability may be achieved.

As a method for measuring an amount of the slip agent present on the surface of the sealant layer 30, the amount of the slip agent is determined by cutting the pouch film laminate to 100 mm in an MD direction x 100 mm in a TD direction, dropping 5 ml of chloroform on the surface of the sealant layer of the pouch film laminate, and allowing the resulting product to stand for 1 minute to prepare a slip agent extraction solution, and then measuring an amount of the slip agent contained in the slip agent extraction solution using gas chromatography.

In the method described above, it is preferable in that the amount of the slip agent present on the surface of the sealant layer may be accurately measured since the slip agent may be extracted for an appropriate amount of time with an appropriate type of solvent. Unlike the method above, when the slip agent is extracted for an excessive amount of time, not only the slip agent present on the surface of the sealant layer but also the slip agent present inside the sealant layer may be overly extracted, making it difficult to accurately measure the amount of slip agent on the surface of the sealant layer. When the amount of the slip agent present on the surface of the sealant layer is not accurately measured, the pouch film laminate may still fail to exhibit superior processability and moldability, even if the amount of slip agent satisfies the range of the present invention. For example, when a solvent is dropped on the surface of the sealant layer and left for at least 3 minutes, the slip agent included inside the sealant layer may be overly extracted into the solvent, making it difficult to accurately measure the amount of the slip agent on the surface of the sealant layer.

For example, when two pouch film laminates are laminated with their sealant layers in contact to prepare a pouch body, and acetone instead of chloroform is injected into an inner space of the pouch body and the pouch body is allowed to stand for 3 minutes instead of 1 minute to ensure contact between the acetone and the sealant layer surface, the amount of the slip agent contained within the sealant layer, not the amount of the slip agent on the surface of the sealant layer, is excessively extracted into the solvent. To achieve excellent moldability and processability, the amount of the slip agent present on the surface of the sealant layer, not the amount of the slip agent contained within the sealant layer, needs to be precisely measured. Therefore, when the amount of the slip agent present on the surface of the sealant layer is measured by excessively precipitating the slip agent contained within the sealant layer as described above, it is difficult to accurately determine the amount of the slip agent present on the surface of the sealant layer that may lead to excellent moldability and processability.

That is, an aspect of the present invention is to accurately measure the amount of the slip agent present on the surface of the sealant layer, which affects moldability and processability, rather than the amount of the slip agent contained within the sealant layer.

The method of measuring using the gas chromatography described above is not limited as long as it is measured by a commonly used measuring instrument, but may be measured by, for example, GC-2010 plus (Shimadzu).

The slip agent is not particularly limited as long as it is a compound capable of imparting slip properties, but may preferably include at least one selected from fatty acid amide-based compounds, and may more preferably be at least one selected from the group consisting of saturated fatty acid amide, unsaturated fatty acid amide, substituted amide, methylol amide, saturated fatty acid bisamide, unsaturated fatty acid bisamide, fatty acid ester amide, and aromatic bisamide.

The saturated fatty acid amide is not particularly limited, but may preferably be at least one selected from the group consisting of lauric acid amide, palmitic acid amide, stearic acid amide, behenic acid amide, and hydroxystearic acid amide.

The unsaturated fatty acid amide is not particularly limited, but may preferably be at least one selected from the group consisting of oleic acid amide and erucic acid amide.

The substituted amide is not particularly limited, but may preferably be at least one selected from the group consisting of N-oleyl palmitic acid amide, N-stearyl stearic acid amide, N-stearyl oleic acid amide, N-oleyl stearic acid amide, and N-stearyl erucic acid amide.

The methylol amide is not particularly limited, but may preferably be methylol stearic acid amide.

The saturated fatty acid bisamide is not particularly limited, but may preferably be at least one selected from the group consisting of methylene bisstearic acid amide, ethylene biscapric acid amide, ethylene bislauric acid amide, ethylene bisstearic acid amide, ethylene bishydroxystearic acid amide, ethylene bisbehenic acid amide, hexamethylene bisstearic acid amide, hexamethylene bisbehenic acid amide, hexamethylene hydroxystearic acid amide, N,N'-distearyl adipate amide, and N,N'-distearyl sebacinic acid amide.

The unsaturated fatty acid bisamide is not particularly limited, but preferably may be at least one selected from the group consisting of ethylene bisoleic acid amide, ethylene biserucic acid amide, hexamethylene bisoleic acid amide, and N,N'-dioleylsebacic acid amide.

The fatty acid ester amide is not particularly limited, but preferably may be stearoamide ethyl stearate.

The aromatic bisamide is not particularly limited, but preferably may be at least one selected from the group consisting of m-xylene bisstearic acid amide, m-xylene bishydroxystearic acid amide, and N,N'-cystearyl isophthalic acid amide.

More preferably, the aromatic bisamide may include at least one selected from erucamide, behenamide, oleamide, and ethylene-bisoleamide. When the above conditions are satisfied, it may be desirable in that whitening observed in the sealant layer may be prevented and contamination induced during the molding process may be prevented.

Hereinafter, each layer of the pouch film laminate according to the present invention will be described in detail.

### (Base layer)

The base layer 10 is disposed on an outermost layer of a battery case to protect an electrode assembly from external impact and electrically insulate the electrode assembly. The base layer 10 may include at least any one of polyethylene terephthalate (PET) or nylon.

According to an embodiment, the base layer 10 may have a lamination structure of a polyethylene terephthalate (PET) film 12 and a nylon film 14. In this case, it is preferable that the nylon film 14 is disposed on a side, that is, an inner side, of the barrier layer 20, and the polyethylene terephthalate film 12 is disposed on a surface side of a battery case.

The polyethylene terephthalate (PET) has excellent durability and electrical insulation, and accordingly, when the PET film is disposed on the surface side, durability and insulation are shown to be excellent. However, the PET film has weak adhesiveness with an aluminum alloy thin film constituting the gas barrier layer 20 and has different stretching behavior, and thus when the PET film is disposed on the side of the gas barrier layer, separation of the base layer and the gas barrier layer may take place during a molding process, and the gas barrier layer may not be stretched uniformly, which may cause degradation in moldability. In contrast, the nylon film has similar stretching behavior to an aluminum alloy thin film constituting the gas barrier layer 20, and thus when the nylon film is disposed between polyethylene terephthalate and the gas barrier layer, moldability may be improved.

The base layer 10 may have a thickness of 5 µm to 70 µm, specifically 7 µm to 65 µm, and more specifically 10 µm to 60 µm. When the above range is satisfied, excellent moldability and post-molding rigidity may be achieved.

In addition, when the base layer 10 has a lamination structure of a polyethylene terephthalate (PET) film 12 and a nylon film 14, the polyethylene terephthalate film may have a thickness of 5 µm to 30 µm, preferably 7 µm to 30 µm, and more preferably 10 µm to 27 µm, and the nylon film may have a thickness of 10 µm to 60 µm, preferably 10 µm to 55 µm, and more preferably 15 µm to 50 µm. When the thickness of the polyethylene terephthalate film and the thickness of the nylon film satisfy the above range, moldability and rigidity after molding may be shown to be excellent.

### (Gas barrier layer)

The gas barrier layer 20 is laminated between the base layer 10 and the sealant layer 30 to secure mechanical strength of a pouch, block the entry and exit of gases or moisture outside secondary batteries, and prevent electrolyte leakage from the inside of a pouch type battery case.

The gas barrier layer 20 may be formed of metal. For example, the gas barrier layer may be a metal thin film containing at least one metal selected from the group consisting of aluminum (Al), copper (Cu), stainless steel (SUS), nickel (Ni), titanium (Ti), and INVAR, but is not limited thereto.

According to an embodiment of the present invention, the gas barrier layer 20 may be formed of an aluminum alloy thin film. When the gas barrier layer 20 is formed using the aluminum alloy thin film, the gas barrier layer may have a predetermined level of mechanical strength and also be light in weight, and may complement electrochemical properties caused by an electrode assembly and electrolyte and obtain heat dissipation. The aluminum alloy thin film may contain elements other than aluminum (Al). For example, the aluminum alloy thin film may include at least one selected from the group consisting of iron (Fe), copper (Cu), chromium (Cr), manganese (Mn), nickel (Ni), magnesium (Mg), silicon (Si), and zinc (Zn).

In another example, the gas barrier layer 20 may be formed of a stainless steel thin film. Specifically, the gas barrier layer 20 may be formed by molding and/or processing a stainless steel thin film. The gas barrier layer 20 formed of stainless steel has relatively low thermal conductivity, and thus is effective in preventing or delaying heat diffusion to other cells during thermal runaway, and has relatively high toughness, and may thus suppress cracking of the pouch during the use of a pouch type battery. The stainless steel may include at least one element selected from the group consisting of, for example, copper (Cu), chromium (Cr), manganese (Mn), nickel (Ni), magnesium (Mg), silicon (Si), and zinc (Zn), in addition to iron (Fe).

The gas barrier layer 20 may have a thickness of 20 µm to 100 µm, preferably 30 µm to 90 µm, more preferably 40 µm to 85 µm, and even more preferably 40 µm to 80 µm. When the above range is satisfied, it is desirable in that the inflow and outflow of gas or moisture from the outside of a secondary battery may be properly blocked, and electrolyte leakage from the inside of a pouch type battery case may be properly prevented. In addition, moldability and gas barrier performance may be enhanced when a cup portion is molded.

In addition, when the pouch film laminate is drawn and formed to manufacture a pouch type battery case, the amount of the slip agent present on the surface of the sealant layer and the surface roughness of the sealant layer, may lead to excellent moldability and processability, may be affected by a thickness of the gas barrier layer. That is, preferably, in the range of the amount of slip agent present on the surface of the sealant layer described above and the range of the surface roughness of the sealant layer described above, when the above-described thickness of the gas barrier layer is satisfied, moldability may be further improved.

### (Sealant layer)

The sealant layer 30 is thermally bonded together at a sealing portion when a pouch type battery case accommodating an electrode assembly inside is sealed to completely seal the inside of the pouch type battery case. To this end, the sealant layer 30 may be formed of a material having excellent heat sealing strength.

The sealant layer 30 may be formed of a material having insulation, corrosion resistance, and sealing properties. Specifically, the sealant layer 30 is in direct contact with the electrode assembly and/or electrolyte inside the pouch type battery case, and may thus be formed of a material having insulation and corrosion resistance. In addition, the sealant layer 30 is supposed to completely seal the inside of the pouch type battery case and block material movement between inside and outside, and may thus be formed of a material having high sealing properties (e.g., excellent heat sealing strength). To make sure that such insulation, corrosion resistance, and sealing properties are obtained, the sealant layer 30 may be formed of a polymer material.

The sealant layer 30 may include at least one material selected from the group consisting of polyethylene, polypropylene, polycarbonate, polyethylene terephthalate, polyvinyl chloride, acrylic polymer, polyacrylonitrile, polyimide, polyamide, cellulose, nylon, polyester, polyparaphenylene benzobisoxazole, polyarylate, and teflon, and may preferably include polyolefin-based resins such as polypropylene (PP) and/or polyethylene (PE). In this case, the polypropylene may be provided with cast polypropylene (CPP), acid modified polypropylene (PPa), polypropylene-ethylene copolymer, and/or polypropylene-butylene-ethylene terpolymer. More preferably, the sealant layer 30 may include at least one selected from polypropylene (PP), acid modified polypropylene (PPa), and casted polypropylene (CPP), and even more preferably, with respect to the gas barrier layer, the sealant layer 30 may be formed of any one of a lamination structure of acid modified polypropylene and polypropylene, a lamination structure of acid modified polypropylene and casted polypropylene, or a single-layer structure of casted polypropylene.

The sealant layer 30 may have a thickness of 30 µm to 130 µm, preferably 40 µm to 120 µm, and more preferably 60 µm to 100 µm. When the thickness of the sealant layer satisfies the above range, there is an effect of both securing the sealing strength of a sealing portion and securing the moldability of a pouch film laminate.

Meanwhile, the sealant layer 30 according to the present invention may have a composite film structure in which two or more materials are respectively formed as layers. For example, the sealant layer 30 may have a multilayer structure. An adhesive layer and/or a skin layer may be disposed between each layer of the sealant layer 30 having a composite film structure. The adhesive layer and/or the skin layer may have thermal adhesiveness and thus may serve to support adhesion between each layer of the sealant layer 30. For example, the adhesive layer and/or the skin layer may include a polypropylene resin, but is not limited thereto. In addition, the adhesive layer and/or the skin layer may be disposed between the sealant layer 30 and the gas barrier layer 20.

The pouch film laminate of the present invention described above may be manufactured through a method for manufacturing a pouch film laminate known in the art. For example, in the pouch film laminate of the present invention may be manufactured in a way that the base layer 10 is attached to an upper surface of the gas barrier layer 20 through an adhesive, and the sealant layer 30 is formed on a lower surface of the barrier layer 20 through coextrusion or an adhesive layer, and may be manufactured through methods such as dry lamination and sandwich lamination. However, the method for preparing a pouch film laminate is not limited thereto.

The pouch film laminate according to the present invention may have a thickness of 120 µm to 300 µm, preferably 130 µm to 280 µm, and more preferably 140 µm to 250 µm. When the thickness of the pouch film laminate satisfies the above range, the molding depth may be increased while minimizing a decrease in battery accommodation space and sealing durability, caused by an increase in the thickness of the pouch laminate.

### Pouch type secondary battery

Next, a pouch type secondary battery according to the present invention will be described.

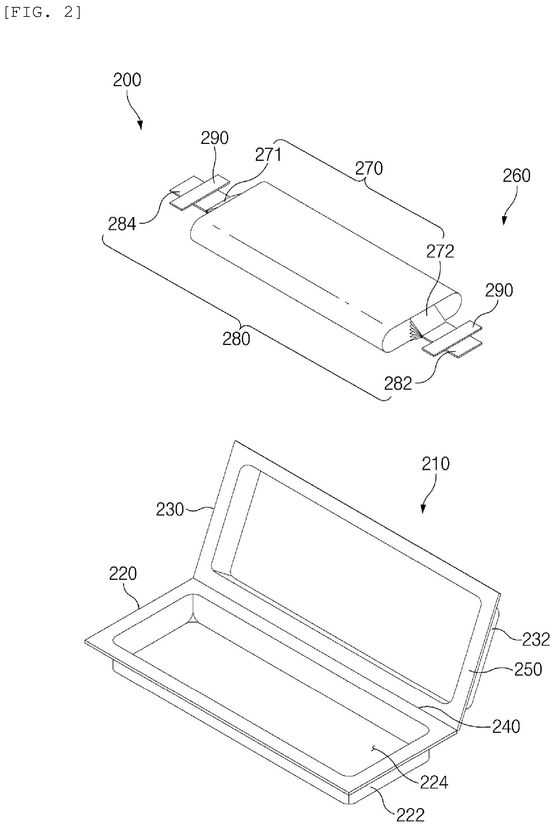

FIG. 2 is an exploded view of a pouch type secondary battery 200 according to the present invention.

As shown in FIG. 2, a pouch type secondary battery 200 according to the present invention may include a pouch type battery case 210 manufactured by molding the pouch film laminate described above, and an electrode assembly 260 accommodated in the pouch type battery case 210. Specifically, the pouch type secondary battery 200 of the present invention may include a pouch type battery case 210, an electrode assembly 260, an electrode lead 280, an insulation portion 290, and an electrolyte (not shown).

Hereinafter, respective components of the pouch type secondary battery of the present invention will be described in more detail with reference to FIG. 2.

### (Pouch type battery case)

The pouch type battery case 210 may be manufactured by drawing the pouch film laminate of the present invention described above. The pouch type battery case 210 may store the electrode assembly 260 inside. The detailed components and physical properties of the pouch film laminate are the same as described above, and thus detailed descriptions are not provided.

The pouch film laminate may be drawn, molded, or stretched by a punch or the like to manufacture the pouch type battery case 210. Consequently, the pouch type battery case 210 may include a cup portion, and specifically, the pouch type battery case 210 may include a cup portion 222 and an accommodation portion 224. The accommodation portion 224 is a place to store the electrode assembly, and may indicate a receiving space formed in the shape of a pocket inside the cup portion 222 as the cup portion 222 is formed.

According to an embodiment of the present invention, the pouch type battery case 210 may include a first case 220 and a second case 230 as shown in FIG. 2. The first case 220 may include an accommodation portion 224 capable of accommodating the electrode assembly 260, and the second case 230 may cover the accommodation portion 224 from above to prevent the electrode assembly 260 from being separated to the outside of the battery case 210. The first case 220 and the second case 230 may be manufactured in a way that one side of the first case 120 and one side of the second case 130 may be connected to each other as shown in FIG. 2, but the embodiment of the present invention is not limited thereto, and the first case 120 and the second case 130 may be diversely manufactured, for example, individually manufactured by being separated from each other.

According to another embodiment of the present invention, when molding a cup portion in a pouch film laminate, two symmetrical cup portions 222 and 232 may be drawn and molded adjacent to each other in one pouch film laminate. In this case, the cup portions 222 and 232 may be formed in the first case 220 and the second case 230, respectively, as shown in FIG. 2. After accommodating the electrode assembly 260 in the accommodation portion 224 provided in the cup portion 222 of the first case 220, a bridge portion 240 formed between the two cup portions 222 and 232 may be folded such that the two cup portions 222 and 232 face each other. In this case, the cup portion 232 of the second case 230 may accommodate the electrode assembly 260 from above. Accordingly, the two cup portions 222 and 232 accommodate one electrode assembly 260, and thus an electrode assembly 260 that is thicker than when there is only one cup portion 222 may be accommodated. In addition, one edge of the secondary battery 200 is formed by folding the pouch type battery case 210, and accordingly, the number of edges to be sealed may be reduced when a sealing process is performed later. Accordingly, the process speed of the pouch type secondary battery 200 may be improved and the number of sealing processes may be reduced.

The pouch type battery case 210 may be sealed while accommodating the electrode assembly 260 so that a portion of an electrode lead 280, which will be described later, i.e., a terminal portion, is exposed. Specifically, when the electrode lead 280 is connected to an electrode tab 270 of the electrode assembly 260 and an insulation portion 290 is formed on a portion of the electrode lead 280, the electrode assembly 260 may be accommodated in the accommodation portion 224 provided in the cup portion 222 of the first case 220, and the second case 230 may cover the accommodation portion 224 from above. Then, an electrolyte is injected into the accommodation portion 224 and the sealing portion 250 formed on an edge of the first case 220 and the second case 230 may be sealed.

The sealing portion 250 may serve to seal the accommodation portion 224. Specifically, the sealing portion 250 may be formed along an edge of the accommodation portion 224 and may thus seal the accommodation portion 224. The temperature at which the sealing portion 250 is sealed may be 180 °C to 250 °C, specifically 200 °C to 250 °C, more specifically 210 °C to 240 °C. When the sealing temperature satisfies the numerical range described above , the pouch type battery case 210 may obtain sufficient sealing strength through heat sealing.

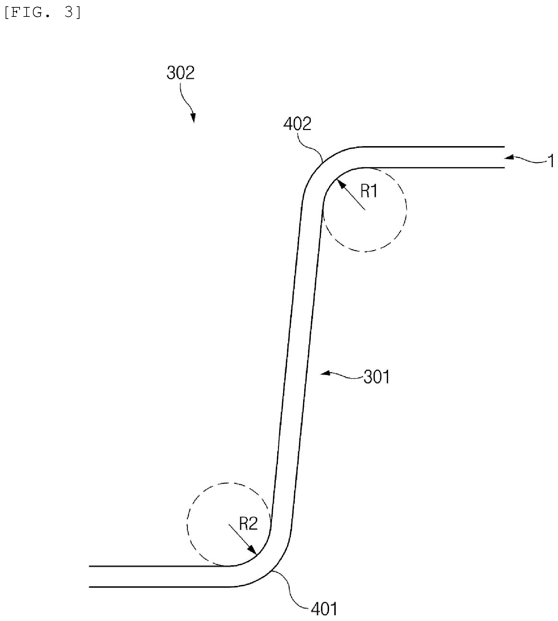

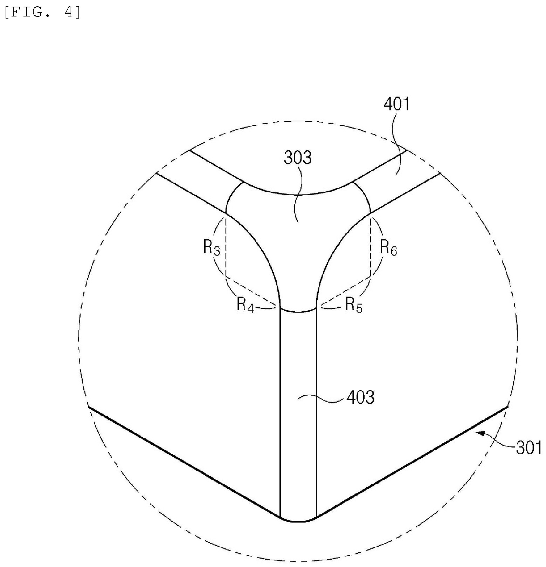

Referring to FIGS. 3 and 4, a punch edge, a die edge, a punch corner, and a thickness edge that may be formed in the cup portion according to an embodiment of the present invention will be described in detail.

Referring to FIG. 3, in the pouch type battery case manufactured by drawing a pouch film laminate 1 according to the present invention, when an accommodation portion 302 is located at the specified position, a radius of curvature R1 of a punch edge 401 and a radius of curvature R2 of a die edge 402 corresponding to a cup portion 301 are shown in the drawing.

The punch edge 401 may connect both an outer wall and a bottom portion surrounding the periphery of the cup portion 301. However, the punch edge 401, when not rounded, becomes sharp. Consequently, stress is concentrated on the punch edge 401 of the cup portion 301 during the molding process of the pouch film laminate 1, leading to easy cracking.

In addition, the die edge 402 may connect the outer wall, a bridge portion, a terrace portion, and a sealing portion. However, the die edge 402, when not rounded, becomes sharp. Consequently, stress is concentrated on the die edge 402 of the cup portion 301 during the molding process of the pouch film laminate 1, leading to easy cracking. In this context, rounding involves forming a curved surface with curvature. This curved surface may have only a uniform curvature, but is not limited thereto and may have a non-constant curvature. Herein, the fact that the punch edge 401, the die edge 402, the thickness edge 403, and the punch corner 303 are rounded with a specific curvature indicates that not only an entire surface has the specific curvature, but also at least a portion has the specific curvature.

To address the issues above, as shown in FIG. 3, the punch edge 401 and/or the die edge 402 may be rounded with a radius of curvature that falls within a specific range. Therefore, the punch edge 401 and/or the die edge 402 formed by being rounded with a radius of curvature that falls within a specific range may disperse the stress concentrated thereon to some extent.

The cup portion may include a plurality of punch edges rounded with a radius of curvature of 1 mm or less, and specifically, the cup portion may include a plurality of punch edges rounded with a radius of curvature of 0.01 mm to 0.7 mm, and more specifically, the cup portion may include a plurality of punch edges rounded with a radius of curvature of 0.01 mm to 0.5 mm. When the above range is satisfied, it is preferable in that the stress applied to the punch edge may be appropriately distributed while excellent energy density may be achieved.

The cup portion may include a plurality of die edges rounded with a radius of curvature of 1.5 mm or less, and preferably, the cup portion may include a plurality of die edges rounded with a radius of curvature of 0.01 mm to 1.25 mm, and more preferably, the cup portion may include a plurality of die edges rounded with a radius of curvature of 0.01 mm to 1.00 mm. When the above range is satisfied, it is preferable in that the stress applied to the die edge may be appropriately distributed while excellent energy density may be achieved.

Referring to FIG. 4, it is determined that in the pouch type battery cases manufactured by drawing the pouch film laminate 1 according to the present invention, the punch edge 401, the punch corner 303, and the thickness edge 403 formed in the cup portion 301 are shown.

As shown in FIG. 4, the punch corner 303 is a vertex formed by the convergence of three edges. Specifically, since the punch corner 303 is formed by the intersection of two punch edges and one thickness edge, stress is more concentrated on the punch corner 303 when the pouch film laminate 1 is stretched. To address the issues above, as shown in FIG. 4, the punch corner 303 may be rounded and formed with a radius of curvature that falls within a specific range. Therefore, the punch corner 303 rounded with a radius of curvature that falls within a specific range may disperse the stress concentrated thereon to some extent.

For example, the radius of curvature of the punch corner 303 may have a varying radius of curvature internally. That is, the radius of curvature at the center of the punch corner 303 may differ from the radius of curvature at the periphery of the punch corner 303. In particular, the radius of curvature at the center of the punch corner 303 may be greater than the radius of curvature at the periphery of the punch corner 303. For example, the periphery of the punch corner 303, which is relatively adjacent to the two punch edges and the one thickness edge, may have a radius of curvature equal to that of at least one of the two punch edges or the thickness edge. In contrast, the center of the punch corner 303, which is relatively distant from the two punch edges and one thickness edge, may have a radius of curvature greater than that of at least one of the punch edge or thickness edge. That is, the radius of curvature of the punch corner 303 may be equal to or greater than the radius of curvature of at least one of the punch edge or the thickness edge.

Consequently, the radius of curvature of the punch corner 303 may increase gradually from the periphery towards the center. In addition, as described above, since the radius of curvature varies within the punch corner 303, the center of the punch corner may not have a perfectly spherical shape, but rather an aspherical one.

In addition, the extent of the punch corner 303 formed in the cup portion 301 needs to be clearly defined, in addition to the radius of curvature. When the punch corner 303 formed in the cup portion 301 is excessively narrow, the pouch film laminate may still undergo excessive stretching, resulting in whitening or cracking. Conversely, when the punch corner 303 formed in the cup portion 301 is excessively wide, the space between the outer wall of the cup portion 301 and the electrode assembly decreases, which may increase the volumetric energy density of a secondary battery 1.

Therefore, according to an embodiment of the present invention, as shown in FIG. 4, the punch corner 303 may be formed within 2 mm to 3.5 mm from the punch edge 401 in a thickness direction R3 of the cup portion 301, within 2 mm to 3.5 mm from the thickness edge 403 in a length direction R4 of the cup portion, and within 2 mm to 3.5 mm from the thickness edge 403 in a width direction R5 of the cup portion. In addition, the forming range of the punch corner 303 may expand as the depth of the cup portion 301 increases. By forming the punch corner 303 of the cup portion 301 as described above, the stress concentration at the punch corner 303 may be mitigated, thereby preventing whitening and cracking.

As shown in FIG. 4, the thickness edge 403 is formed in the thickness direction of the cup portion 301, and at least one of the thickness edges 403 may be rounded. As shown in FIG. 4, the thickness edges 403 is joined with two adjacent punch edges to form the punch corner 303 described above.

The radius of curvature of the thickness edge 403 may be either the same as or different from the radius of curvature R1 of at least one of the two adjacent punch edges. For example, the cup portion may include a plurality of thickness edges 403 rounded with a radius of curvature of 0.5 mm to 5 mm, and preferably, the cup portion may include a plurality of thickness edges 403 rounded with a radius of curvature of 0.5 mm to 2 mm. When the above range is satisfied, stress applied to the thickness edge may be appropriately distributed, thereby preventing whitening and/or cracking.

Meanwhile, the above-described ranges of the slip content and surface roughness of the sealant layer may be suitable for achieving excellent processability and moldability in the manufacturing of pouch type battery cases including the above-described punch edges, die edges, thickness edges, and/or punch corners. Specifically, when the above-described radius of curvature or length of punch edges, die edges, thickness edges, and/or punch corners is satisfied, the pouch film laminate may be subjected to severe molding conditions that may easily cause breakage during the drawing process. Therefore, satisfying the range of the amount of slip agent present on the surface of the sealant layer described above and the range of the surface roughness of the sealant layer described above may be suitable for achieving excellent processability and moldability.

### (Electrode assembly)

The electrode assembly 260 may be inserted into the pouch type battery case 210 and sealed through the pouch type battery case 210 after electrolyte injection.

A positive electrode, a separator, and a negative electrode may be sequentially stacked to form the electrode assembly 260. Specifically, the electrode assembly 260 may include two types of electrodes, which are a positive electrode and a negative electrode, and a separator sandwiched between the electrodes to insulate the electrodes from each other.

The positive electrode and the negative electrode may have a structure in which an active material slurry is applied to an electrode current collector in the form of a metal foil or metal mesh containing aluminum and copper, respectively. Typically, granular active materials, auxiliary conductors, binders, and conductive materials are stirred with a solvent added to form a slurry. The solvent may be removed in subsequent processing.

A slurry mixed with an electrode active material, a binder, and/or a conductive material is applied to a positive electrode current collector and a negative electrode current collector to manufacture a positive electrode and a negative electrode, and the positive electrode and the negative electrode are stacked on both sides of the separator, and accordingly, the electrode assembly 260 may be manufactured into a predetermined shape. Types of the electrode assembly 260 may include a stack type, a jelly roll type, and a stack and folding type, but are not limited thereto.

The electrode assembly 260 may include an electrode tab 270.

The electrode tab 270 is connected to each of the positive electrode and the negative electrode of the electrode assembly 260, and protrudes outward from the electrode assembly 260, and may thus serve as a path through which electrons move between the inside and the outside of the electrode assembly 260. A current collector included in the electrode assembly 260 may be provided with a portion to which an electrode active material is applied, and an end portion to which an electrode active material is not applied, that is, a non-coating portion. The electrode tab 270 may be formed by cutting the non-coating portion or formed by connecting a separate conductive member to the non-coating portion through ultrasonic welding or the like. As shown in FIG. 2, the electrode tab 270 may protrude in different directions from the electrode assembly 260, but is not limited thereto, and may be formed to protrude in various directions, such as protruding from one side in the same direction.

### (Electrode lead)

The electrode lead 280 may supply electricity to the outside of the secondary battery 200. The electrode lead 280 may be connected to the electrode tab 270 of the electrode assembly 260 through spot welding, or the like.

The electrode lead 280 may be connected to the electrode assembly 260 and may protrude to the outside of the pouch type battery case 260 via the sealing portion 250. Specifically, one end of the electrode lead 280 may be connected to the electrode assembly 260, particularly to the electrode tab 270, and the other end of the electrode lead 280 may protrude to the outside of the pouch type battery case 210.

The electrode lead 280 may include a positive electrode lead 282 with one end connected to the positive electrode tab 272 and extending in a direction in which the positive electrode tab 272 protrudes, and a negative electrode lead 284 with one end connected to the negative electrode tab 274 and extending in a direction in which the negative electrode tab 274 protrudes. The other ends of both the positive lead 282 and the negative lead 284 may protrude to the outside of the battery case 210. Accordingly, electricity generated inside the electrode assembly 260 may be supplied to the outside. In addition, the positive electrode tab 272 and the negative electrode tab 274 are each formed to protrude in various directions, and accordingly, the positive electrode lead 282 and the negative electrode lead 284 may also extend in various directions. The positive electrode lead 282 and the negative electrode lead 284 may be made of materials different from each other. That is, the positive electrode lead 282 may be made of the same aluminum (Al) material as a positive electrode current collector, and the negative electrode lead 284 may be made of the same copper (Cu) or nickel (Ni)-coated copper material as a negative electrode current collector. A portion of the electrode lead 280 protruding to the outside of the battery case 210 may serve as a terminal portion and be electrically connected to an external terminal.

### (Insulation portion)

The insulation portion 290 may prevent electricity generated from the electrode assembly 260 from flowing to the battery case 210 through the electrode lead 280, and allow the sealing of the battery case 210 to be maintained. To this end, the insulation portion 290 may be formed of a non-conductor having non-conductive properties in which electricity does not flow well. In general, as the insulation portion 290, relatively thin insulation tape or film easily attached to the electrode lead 280 is widely used, but the embodiment of the present invention is not limited thereto, and thus any member capable of insulating the electrode lead 280 may be used.

The insulation portion 290 may be disposed to surround an outer circumferential surface of the electrode lead 280. Specifically, at least a portion of the electrode lead 280 may be surrounded by the insulation portion 290. In this case, the insulation portion 290 may be disposed between the electrode lead 280 and the pouch type battery case 210. The insulation portion 290 may be placed to be limited within the sealing portion 250 in which the first case 220 and the second case 230 of the pouch type battery case 210 are thermally fused, and may make the electrode lead 280 adhere to the battery case 210.

### (Electrolyte)

The pouch type secondary battery 200 according to the present invention may further include an electrolyte (not shown) injected into the pouch type battery case 210. The electrolyte is used to move lithium ions generated through electrochemical reactions of an electrode upon charging/discharging of the secondary battery 200, and may include a non-aqueous organic electrolyte solution that is a mixture of lithium salt and an organic solvent, or a polymer using a polymer electrolyte. In addition, the electrolyte may include a sulfide-based solid electrolyte, an oxide-based solid electrolyte, or a polymer-based solid electrolyte, and such solid electrolyte may have flexibility, and thus be easily deformed under external force.

Hereinafter, the present invention will be described in more detail with reference to specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

### Examples and Comparative Examples

### Example 1 Preparation of pouch film laminate

A sealant layer was prepared by sequentially laminating 80 µm-thick acid modified polypropylene (PPa) and polypropylene (PP), where the polypropylene (PP) surface was treated with an erucamide slip agent at the levels specified in Table 1 below, and the surface roughness Ra of the polypropylene (PP) was adjusted to the values specified in Table 1.

Thereafter, a second adhesive film, a 25 µm thick nylon film, a first adhesive film, and a 12 µm thick polyethylene terephthalate (PET) film were sequentially laminated on one surface of a 60 µm thick aluminum alloy film, and the manufactured sealant layer was sequentially laminated on the other surface of the aluminum alloy film. As a result, a pouch film laminate having a structure in which the prepared sealant layer (polypropylene/acid modified polypropylene) / aluminum alloy thin film / second adhesive film / nylon film / first adhesive film / polyethylene terephthalate film were sequentially laminated was prepared.

### Examples 2 to 4 and Comparative Examples 1 to 7: Preparation of pouch film laminate

A pouch film laminate was manufactured in the same manner as in Example 1, except that the amount of slip agent added to the sealant layer was changed, and the surface roughness of the sealant layer was regulated differently, thereby changing the amount of slip agent on the surface of the sealant layer and the surface roughness of the sealant layer as shown in Table 1 below.

### Experimental Example 1: Measurement of surface slip agent amount

### (Method A)

The surface slip agent amount of each pouch film laminate manufactured according to Examples 1 to 4 and Comparative Examples 1 to 7 was measured.

Specifically, the amount of the slip agent was measured by cutting each pouch film laminate to 100 mm in an MD direction x 100 mm in a TD direction, dropping 5 ml of chloroform on the surface of the sealant layer of the pouch film laminate, and allowing the resulting product to stand for 1 minute to prepare a slip agent extraction solution, and then measuring an amount of the slip agent contained in the slip agent extraction solution using gas chromatography. In this case, the measuring device of the gas chromatography (GC) was Shimadzu GC-2010 plus.

The measurement results are shown in table 1 below.

### (Method B)

The surface slip agent amount of **each pouch film laminate manufactured according to Examples 1 to 4 and Comparative Examples 1 to 7** was measured.

In detail, each pouch film laminate was aged at 40 °C for 10 days, and then cut into two pieces having a size of 100 mm (MD direction) x 100 mm (TD direction), and the two pieces of pouch film laminates were laminated with their sealant layers in contact and sealed at 200 °C to prepare a pouch body. 1 ml of acetone was injected into an internal space of the pouch body using a syringe, and the pouch body was allowed to stand for 3 minutes to ensure contact between the acetone and the sealant layer surface, and then the acetone was removed from the pouch body. The amount of slip agent contained in the removed acetone was measured using gas chromatography (GC).

The measurement results are shown in table 1 below.

### Experimental Example 2: Measurement of surface roughness

The surface roughness of the sealant layer in each pouch film laminate manufactured according to Examples 1 to 4 and Comparative Examples 1 to 7 was measured using an optical measuring device (NV-2700, Optical Profiler, Nano System).

The measured surface roughness Ra is shown in Table 1 below.

### Experimental Example 3: Measurement of friction coefficient

The friction coefficient of each pouch film laminate manufactured according to Examples 1 to 4 and Comparative Examples 1 to 7 was measured.

As a method for measuring the friction coefficient, a sled metal having a size of 130 mm (MD direction) x 65 mm (TD direction) and a weight of 200 g was brought into contact with the sealant layer of the pouch film laminate having a size of 300 mm (MD direction) x 200 mm (TD direction) to measure the friction coefficient.

Specifically, the sled metal was moved 100 mm over the sealant layer at a speed of 100 mm/min, and the friction coefficient was measured by averaging five measurements of kinetic friction coefficients in a section of 20 mm to 80 mm.

The measurement results are shown in table 1 below.

### Experimental Example 4: Evaluation of moldability of pouch film laminates

### (Evaluation of molding depth)

The moldability of each pouch film laminate manufactured according to Examples 1 to 4 and Comparative Examples 1 to 7 was evaluated.

As a method for evaluating the moldability of the pouch film laminate, each pouch film laminate was cut into the same size of 300 mm (MD direction) x 400 mm (TD direction), and then a maximum molding depth without cracks was recorded while changing the molding depth in a battery case molding device having two molding portions of 61 mm (MD direction) x 159 mm (TD direction). In this case, the punch and molding portion of the battery case molding device were subjected to filleting at the corners and edges, with the punch having a corner radius of 2 mm and an edge radius of 0.5 mm, and the molding portion having a corner radius of 2.5 mm and an edge radius of 1 mm. In addition, the clearance between the punch and the molding portion was 0.5 mm.

In this case, in the cup portion of the molding pouch film laminate, the punch edge had a radius of curvature R1 of 0.5 mm, the die edge had a radius of curvature R2 of 1.0 mm, and the thickness edge had a radius of curvature of 2.0 mm. The punch corner had a thickness-directional length R3 of 3.5 mm, a length-directional length R4 of 3.5 mm, and a width-directional length R5 of 3.5 mm.

The measured molding depth is presented in Table 1 below.

### (Evaluation of wrinkle occurrence)

Meanwhile, in the evaluation of the molding depth above, a case where wrinkles were formed in the cup portion of the pouch film laminate at the maximum molding depth in the molding of a pouch film using an uncontaminated molding device was marked as O, and a case of no wrinkles was marked as X.

The occurrence of wrinkles is presented in Table 1 below.

### Experimental Example 5: Measurement of slip agent cleaning cycle during molding of pouch film laminates

When molding each pouch film laminate manufactured according to Examples 1 to 4 and Comparative Examples 1 to 7, the slip agent cleaning cycle was measured.

Specifically, when continuously producing pouch film laminates in which a cup portion having a maximum molding depth was formed, the slip agent cleaning cycle was measured based on the maximum number of cycles without wrinkles.

The measurement results are described in table 1 below.

**[Table 1]**

| | Sealant layer surface slip agent amount (mg/m²) | | Surface roughness (Ra, µm) | Friction coefficient | Molding depth (mm) | Presence of wrinkles | Slip agent cleaning cycle (count) |
|---|---|---|---|---|---|---|---|
| | Method A | Method B | | | | | |
| Example 1 | 11 | 66 | 0.10 | 0.11 | 8 | X | 3000 |
| Example 2 | 10 | 60 | 0.13 | 0.08 | 8 | X | 4000 |
| Example 3 | 8 | 48 | 0.24 | 0.14 | 8 | X | 5000 |
| Example 4 | 15 | 90 | 0.30 | 0.09 | 8 | X | 6000 |
| Comparative Example 1 | 4 | 24 | 0.05 | 0.30 | 6 | X | 3000 |
| Comparative Example 2 | 6 | 36 | 0.05 | 0.19 | 8 | O | 500 |
| Comparative Example 3 | 16 | 96 | 0.06 | 0.11 | 8 | O | 200 |
| Comparative Example 4 | 5 | 30 | 0.07 | 0.26 | 6 | X | 3000 |
| Comparative Example 5 | 10 | 60 | 0.60 | 0.05 | 8 | O | 6000 |
| Comparative Example 6 | 1 | 8 | 0.26 | 0.50 | 5 | X | 6000 |
| Comparative Example 7 | 26 | 144 | 0.27 | 0.06 | 8 | O | 100 |

Referring to Table 1 above, in Examples 1 to 4, unlike Comparative Examples 1 to 7, both the above-described sealant layer surface slip agent amount range and the above-described sealant layer surface roughness range are satisfied, and thus the molding depth is excellent with no wrinkles, resulting in excellent moldability, and the slip agent cleaning cycle is also long, leading to excellent processability.

Meanwhile, unlike the case of measuring through the method of measuring the amount of slip agent present on the sealant layer surface (Method A) according to an embodiment of the present invention, in the measurement of Method B, it is determined that the amount of slip agent present inside the sealant layer is excessively precipitated, making it difficult to precisely measure the amount of surface slip agent present on the sealant layer surface. That is, it is determined that the range of the amount of slip agent present on the surface of the sealant layer that may lead to excellent processability and moldability according to the present invention correspond to the range of the amount of slip agent measured by the measuring method according to the present invention.

### [Description of Symbols]

1: Pouch film laminate
10: Base layer
12: Polyethylene terephthalate film
14: Nylon film
20: Gas barrier layer
30: Sealant layer
200: Pouch type secondary battery
210: Pouch type case
220: First case
222: Cup portion
224: Accommodation portion
230: Second case
232: Cup portion
240: Bridge portion
250: Sealing portion
260: Electrode assembly
270: Electrode tab
272: Positive electrode tab
274: Negative electrode tab
280: Electrode lead
282: Positive electrode lead
284: Negative electrode lead
290: Insulation portion
301: Cup portion
302: Accommodation portion
303: Punch corner
401: Punch edge
402: Die edge
403: Thickness edge

## Claims

1. A pouch film laminate comprising a base layer, a gas barrier layer, and a sealant layer, which are sequentially laminated,
wherein the sealant layer contains a slip agent of 5 mg/m² to 25 mg/m², present on a surface thereof,
the sealant layer has a surface roughness Ra of 0.1 µm to 0.5 µm, and
an amount of the slip agent is determined by cutting the pouch film laminate to 100 mm in an MD direction x 100 mm in a TD direction, dropping 5 ml of chloroform on the surface of the sealant layer of the pouch film laminate, and allowing the resulting product to stand for 1 minute to prepare a slip agent extraction solution, and then measuring an amount of the slip agent contained in the slip agent extraction solution using gas chromatography.

2. The pouch film laminate of claim 1, wherein the sealant layer contains a slip agent of 5 mg/m² to 15 mg/m², present on a surface thereof.

3. The pouch film laminate of claim 1, wherein the sealant layer has a surface roughness Ra of 0.1 µm to 0.3 µm.

4. The pouch film laminate of claim 1, wherein the slip agent comprises at least one selected from fatty acid amide-based compounds.

5. The pouch film laminate of claim 1, wherein the base layer has a thickness of 5 µm to 70 µm.

6. The pouch film laminate of claim 1, wherein the gas barrier layer comprises at least one metal selected from the group consisting of aluminum (Al), copper (Cu), stainless steel (SUS), nickel (Ni), titanium (Ti), and INVAR.

7. The pouch film laminate of claim 1, wherein the gas barrier layer has a thickness of 20 µm to 100 µm.

8. The pouch film laminate of claim 1, wherein the sealant layer comprises at least one selected from polypropylene (PP), acid modified polypropylene (PPa), and casted polypropylene (CPP).

9. The pouch film laminate of claim 1, wherein the sealant layer has a thickness of 30 µm to 130 µm.

10. The pouch film laminate of claim 1, having a thickness of 120 µm to 300 µm.

11. A pouch type battery case manufactured by drawing the pouch film laminate of claim 1.

12. The pouch type battery case of claim 11, comprising a cup portion,
wherein the cup portion comprises a plurality of punch edges rounded with a radius of curvature of 1 mm or less.

13. The pouch type battery case of claim 11, comprising a cup portion,
wherein the cup portion comprises a plurality of die edges rounded with a radius of curvature of 1.5 mm or less.

14. The pouch type battery case of claim 11, comprising a cup portion,
wherein the cup portion comprises a plurality of thickness edges rounded with a radius of curvature of 0.5 mm to 5 mm.

15. A pouch type secondary battery comprising the pouch type battery case of claim 11.
